# EUROPÄISCHE PATENTSCHRIFT

(11) **EP 1 727 210 B1**
(45) Veröffentlichungstag und Bekanntmachung des Hinweises auf die Patenterteilung: **03.11.2010**
(21) Anmeldenummer: 06010607.7
(22) Anmeldetag: 23.05.2006
(51) Int. Cl.: H01L 31/0203

(54) **Verfahren zur Herstellung eines gehäuseabdichtenden Fensterelementes**
Method for fabricating a window element sealing a housing
Méthode de fabrication d'un élement de fenêtre scellant un boitier

(30) Priorität: 26.05.2005 DE 102005024512
(43) Veröffentlichungstag der Anmeldung: 29.11.2006
(73) Patentinhaber: JENOPTIK Laser, Optik, Systeme GmbH, 07745 Jena (DE)
(72) Erfinder: Weyh, Thomas, Dr. rer. nat., 07646 Stadtroda (DE); Gittler, Elvira, 07745 Jena (DE); Brode, Wolfgang, 07629 Hermsdorf (DE)
(74) Vertreter: Schaller, Renate

(56) Entgegenhaltungen:
- WO-A-95/17014
- US-A- 5 483 095
- US-A1- 2003 111 441
- US-A1- 2003 188 881

## Beschreibung

Die Erfindung bezieht sich auf ein Verfahren zur Herstellung von in ein Gehäuse hermetisch dicht einlötbaren Fensterelementen und auf ein gehäuseabdichtendes Fensterelement.

Derartige Fensterelemente sind insbesondere dafür geeignet, Gehäuse von Strahlungsdetektoren bei Gewährleistung optischer Funktionen vakuumdicht zu verschließen.

Ausführungen von Fensterelementen, die mit dem Ziel einer gas- bzw. vakuumdichten Verbindung in Gehäuse von Strahlungsdetektoren eingelötet werden, sind speziell für Infrarot-Detektoren z. B. aus JP 11-211555 bekannt.

Dabei können die Fenster im Allgemeinen in einer Maske optisch beschichtet werden. Im Anschluss wird auf die maskierten Bereiche auf der Oberfläche und auf den seitlichen Rand der Fenster eine Metallbeschichtung aufgebracht, über die später die Lötverbindung realisiert wird. Die Metallbeschichtung kann dabei chemisch (JP 01-039528) aufgebracht oder aufgesputtert (DE 102 40 355 A1) werden.

Ein bestehendes Problem dabei ist ein nur qualitativ unzureichender Übergangsbereich zwischen optischer Beschichtung und Metallbeschichtung. So können Rückstände optischer Schichtmaterialien dazu führen, dass im Bereich der Metallbeschichtung Haftungsprobleme auftreten, die eine dichte Lötverbindung des Fensters mit dem Detektorgehäuse beeinträchtigen. Ferner kann das Aufbringen der Metallbeschichtung die Eigenschaften der optischen Schichten stören, z. B. in Form von induzierten Haftungsproblemen bzw. durch Streu- oder Störlichteintrag an Defektstellen.

Aus der US 5,483,095 ist eine optische Halbleitervorrichtung mit einem Gehäuse bestehend aus einem Gehäusekörper und einem Siliziumfenster, welches über ein Lot mit dem Gehäusekörper verbunden ist, bekannt.

Zur Herstellung des Fensters wird auf einen Siliziumwafer eine Au-Schicht abgeschieden, die anschließend soweit wieder abgetragen wird, dass nur eine Vielzahl von ringförmigen Au-Loten bestehen bleiben. Anschließend wird eine als Abdeckschicht wirkende Maske aufgebracht und die maskenfreien Bereiche werden mit verschiedenen Verfahren optisch beschichtet, bevor am Ende die Abdeckschicht mittels einer Abhebetechnik (Lift-off-Verfahren) entfernt wird und der Wafer entlang des Umfangs des Lotes ausgeschnitten wird.

Die US 2003/0111441 A1 offenbart für ein Mikrogerät ein Gehäuse mit einem integrierten Fenster, um Strahlung in das Gehäuseinnere zu lassen. Das Fenster ist in das Gehäuse eingelötet, mit einem mehrschichtigen Lot. Es gibt keine Angaben, ob das Fenster auch optisch beschichtet ist.

Es ist die Aufgabe der Erfindung, ein Verfahren zur Herstellung eines optisch beschichteten Fensters zu finden, das eine verbesserte hermetische Abdichtung zwischen Fenster und Gehäuse ermöglicht durch eine erhöhte Haftung der Metallbeschichtung.

Gemäß der Erfindung wird die Aufgabe durch ein Verfahren zur Herstellung von in ein Gehäuse hermetisch dicht einlötbaren Fensterelementen gelöst, bei dem optisch durchlässiges flaches Trägermaterial (Wafer), dessen Größe ausreichend ist für eine Vielzahl von Fensterelementen, auf mindestens einer Oberfläche mit einer optischen Beschichtung versehen wird, von der anschließend auf einer beschichteten Oberfläche rahmenförmige Teilbereiche, welche optisch wirksame Flächen der Fensterelemente umschließen, entfernt werden, wonach auf die erzeugten beschichtungsfreien Teilbereiche eine zur Herstellung einer Lötverbindung mit dem Gehäuse dienende Metallbeschichtung aufgebracht wird und eine Vereinzelung der Fensterelemente aus dem Trägermaterial erfolgt.

Unter optischer Beschichtung sollen z. B. Beschichtungsmaterialien verstanden werden, die für einen bestimmten Spektralbereich durchlässig und für andere Spektralbereiche undurchlässig sind, wodurch Filterfunktionen realisiert werden können. Ferner sollen darunter auch Antireflexschichten oder Interferenzschichtsysteme für Bandpassfilter verstanden werden.

Das selektive Entfernen der optischen Beschichtung kann, um den erforderlichen Haftungsgrund für die Metallbeschichtung herzustellen, sowohl durch mechanisches Abtragen mit begrenzter Schnitttiefe als auch durch Ätzen erfolgen, wobei die mechanische Entfernung vorteilhaft mit einer Oberflächenaufrauung verbunden sein kann.

Nach einer Reinigung wird der Wafer einem komplexem Beschichtungs- und Abtragungsprozess unterzogen, bei dem zunächst die verbliebene optische Beschichtung und die beschichtungsfreien Teilbereiche vollständig mit einem selektiv zu der optischen Beschichtung ätzbaren Haftschichtsystem versehen und anschließend Bereiche mit der optischen Beschichtung mit einer Lift-Off-Maske überdeckt werden, bevor ganzflächig eine Beschichtung mit einem Lötschichtsystem erfolgt, wonach sich die zur Herstellung der Lötverbindung mit dem Gehäuse dienende Metallbeschichtung im Lift-Off-Verfahren ergibt, wobei die Metallbeschichtung als Maske zum Ätzen des Haftschichtsystems dient.

Vorteilhaft weist das selektiv zu der optischen Beschichtung ätzbare Haftschichtsystem eine Interdiffusionsschicht, bestehend aus Aluminium und eine Barriereschicht, bestehend aus Titan oder einer Titanlegierung, auf.

Zwei aufeinander folgende selektive Strukturierungsprozesse schaffen hierbei die Möglichkeit, Schichten einzubringen, durch die optische oder mechanische Funktionen erfüllt werden können. Das können Schichten sein, die sich entweder an die optisch wirksame Schicht anschließen oder auf oder unter der optisch wirksamen Schicht aufgebracht sind, die eine Blenden- oder eine Filterfunktionen ausüben oder die absorbierend oder Streulicht unterdrückend wirken.

Die ca. 30 nm dicke, nicht geschlossene Interdiffusionsschicht gewährleistet eine sehr hohe Haftfestigkeit, da das Aluminium durch die Prozessenergie beim Beschichtungsprozess, der vorzugsweise durch Sputtern erfolgt, direkt in die Grenzfläche des Trägermaterials diffundiert.

Die Barriereschicht stellt eine optische Versiegelung zwischen dem Lötschichtsystem und der optischen Beschichtung her.

In einer bevorzugten Ausgestaltung der Erfindung enthält das Lötschichtsystem eine Zwischenschicht, bestehend aus Platin oder Eisen/Nickel oder Nickel oder Palladium, und eine Abschlussschicht, bestehend aus Gold.

Optische Schichtsysteme, die speziell im infraroten Spektralbereich Anwendung finden sollen, können vorteilhaft als obere Abschlussschicht eine Germanium- oder eine Zinksulfid-Schicht aufweisen, wodurch eine Erhöhung der Selektivität des Ätzprozesses des Haftschichtsystems zu den optischen Schichten erreicht werden kann.

Mit der Erfindung, bei der ein Wafer als optisch durchlässiges flaches Trägermaterial zunächst im Ganzen prozessiert, d. h. einem komplexen Beschichtungs- und Abtragungsprozess unterzogen und anschließend in einzelne Fensterelemente zerteilt wird, lassen sich diese mit vorbestimmter Geometrie herstellen, bei denen es für einen vakuumdichten Gehäuseverschluss ausreicht, eine Lötverbindung zwischen einer ausschließlich frontseitig auf dem Fensterelement aufgebrachten Metallisierung und dem Gehäuse herzustellen. Das liegt darin begründet, dass eine fehlstellenfreie Oberflächenbeschichtung erreicht wird, indem Störbereiche, die einer guten Haftung der Metallschichten entgegenwirken, in ausreichendem Maße reduziert werden. Insbesondere gelingt es, den für die Metallisierung vorgesehenen Bereich vom Material der optischen Beschichtung auf einfache und kostengünstige Weise zu befreien und einen sauberen Haftungsgrund zu schaffen.

Weiterhin gewährleistet die Erfindung eine sehr hohe Präzision bei der Herstellung der Fensterlelemente, da lithografische Verfahren zum Strukturieren der optischen und der Metallbeschichtung eingesetzt werden können.

Gegenstand der Erfindung ist ferner ein gehäuseabdichtendes Fensterelement, das auf einer, mit einer optischen Beschichtung versehenen Fensteroberfläche eine zur Herstellung einer Lötverbindung mit dem Gehäuse dienende, aus einer Grundschicht und einem Lötschichtsystem bestehende Metallbeschichtung aufweist, die auf der Fensteroberfläche in einem von der optischen Beschichtung befreiten Oberflächenbereich aufgebracht ist und die optische Beschichtung rahmenförmig umgibt, wobei die Grundschicht aus einer Interdiffusionsschicht und einer darüber liegenden Barriereschicht besteht, die eine optische Versiegelung zwischen dem Lötschichtsystem und der optischen Beschichtung herstellt.

Weitere vorteilhafte Ausgestaltungen sind in den Unteransprüchen enthalten.

Die Erfindung soll nachstehend anhand der schematischen Zeichnung näher erläutert werden. Es zeigen:
- Fig. 1: ein mit dem erfindungsgemäßen Verfahren hergestelltes Fensterelement
- Fig. 2: das in ein Gehäuse eingebaute Fensterelement gemäß Fig. 1
- Fig. 3: den Übergangsbereich zwischen dem Lötschichtsystem und der optischen Beschichtung
- Fig. 4: einen Wafer aus optisch durchlässigem flachem Trägermaterial, der einem komplexen Beschichtungs- und Abtragungsprozess unterzogen wird

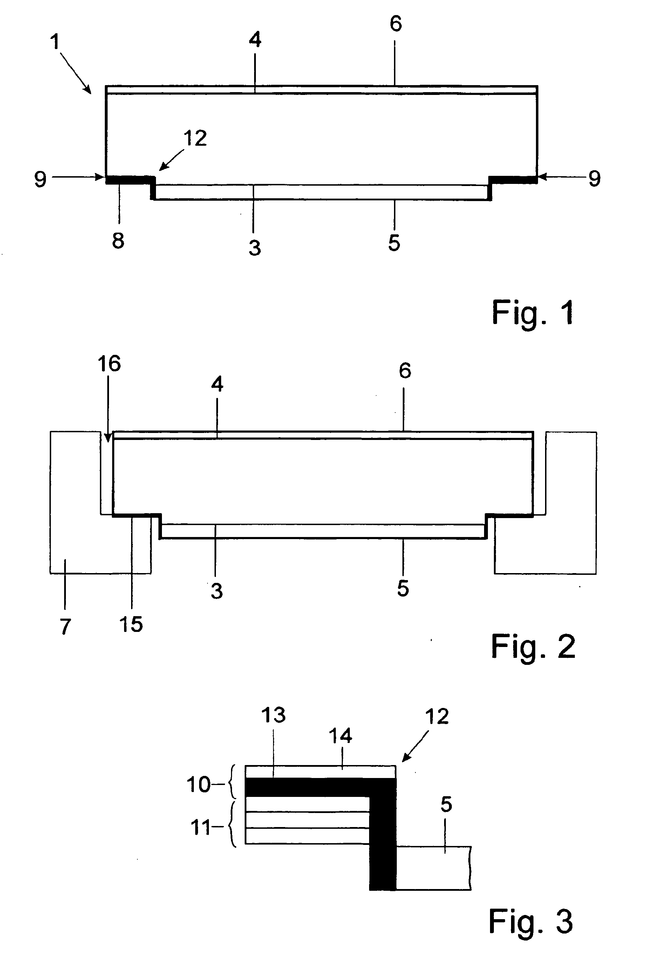

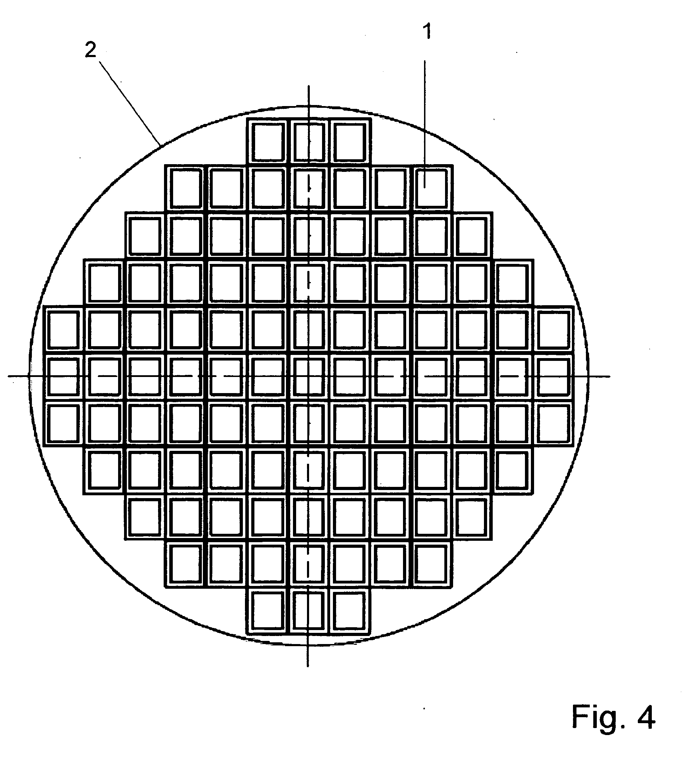

Das in Fig. 1 dargestellte Fensterlelement 1 ist aus einem optisch durchlässigen und vorteilhaft als Wafer 2 ausgebildeten, flachen Trägermaterial herausgearbeitet, dessen Größe entsprechend Fig. 4 für eine Vielzahl von Fensterelementen 1 ausreicht.

Die Fensterlelemente 1, die gemäß der vorliegenden Erfindung erst nach einem vollständig erfolgten Beschichtungs- und Abtragungsprozess vereinzelt werden, sind auf mindestens einer, bevorzugt jedoch auf beiden sich gegenüberliegenden Fensteroberflächen 3, 4 mit einer optischen Beschichtung 5, 6 versehen. Die eine beschichtete Fensteroberfläche 3 weist eine zur Herstellung einer Lötverbindung mit einem Gehäuse 7 (Fig. 2) dienende Metallbeschichtung 8 auf, die auf der Fensteroberfläche in einem von der optischen Beschichtung befreiten Oberflächenbereich 9 aufgebracht ist. Die aus einem Haftschichtsystem 10 als Grundschicht und einem Lötschichtsystem 11 bestehende Metallbeschichtung 8 umgibt die optische Beschichtung 5 als Fensterrahmen, wobei zwischen dem Lötschichtsystem 11 und der optischen Beschichtung 5, hier im Winkelbereich 12, der in Fig. 3 genauer dargestellt ist, eine zum Haftschichtsystem 10 gehörende Titan-Barriereschicht 13 eine optische Versiegelung herstellt. Ein die Funktion des Fensterlelementes beeinträchtigendes Eindringen von Störstrahlung wird dadurch wirkungsvoll verhindert. Unterhalb der Barriereschicht 13 ist eine zum Haftschichtsystem 10 gehörige Interdiffusionsschicht 14 vorgesehen.

Infolge des erfindungsgemäßen Verfahrens ist es für eine hermetisch dichte Verbindung zwischen dem Fensterelement 1 und dem in Fig. 2 nur zum Teil dargestellten Gehäuse 7 ausreichend, lediglich über einen frontseitigen Bereich des Fensterelementes 1 eine Lötverbindung 15 zwischen der rahmenförmigen Metallbeschichtung 8 und dem Gehäuse 7 herzustellen. Eine zusätzliche seitliche Verbindung in dem mit 16 bezeichneten Bereich ist nicht erforderlich.

## Patentansprüche

1. Verfahren zur Herstellung von in ein Gehäuse hermetisch dicht einlötbaren Fensterelementen (1), bei dem optisch durchlässiges flaches Trägermaterial (2), dessen Größe ausreichend ist für eine Vielzahl von Fensterelementen (1), auf mindestens einer Oberfläche mit einer optischen Beschichtung (5,6) versehen wird, von der anschließend auf einer beschichteten Oberfläche (3) rahmenförmige Teilbereiche, welche optisch wirksame Flächen der Fensterelemente (1) umschließen, entfernt werden, wonach auf die erzeugten beschichtungsfreien Teilbereiche (9) eine zur Herstellung einer Lötverbindung mit dem Gehäuse (7) dienende Metallbeschichtung (8) aufgebracht wird und eine Vereinzelung der Fensterelemente (1) aus dem Trägermaterial (2) erfolgt.

2. Verfahren nach Anspruch 1, bei dem zum Aufbringen der Metallbeschichtung zunächst die verbliebene optische Beschichtung und die beschichtungsfreien Teilbereiche vollständig mit einem selektiv zu der optischen Beschichtung ätzbarem Haftschichtsystem versehen und anschließend Bereiche mit der optischen Beschichtung mit einer Lift-Off-Maske überdeckt werden, bevor ganzflächig eine Beschichtung mit einem Lötschichtsystem erfolgt, wonach sich die zur Herstellung der Lötverbindung mit dem Gehäuse dienende Metallbeschichtung im Lift-Off-Verfahren ergibt, wobei die Metallbeschichtung als Maske zum Ätzen des Haftschichtsystems dient.

3. Verfahren nach Anspruch 2, bei dem das selektiv zu der optischen Beschichtung ätzbare Haftschichtsystem eine Interdiffusionsschicht, bestehend aus Aluminium, und eine Barriereschicht, bestehend aus Titan oder einer Titanlegierung, aufweist.

4. Verfahren nach Anspruch 2 oder 3, bei dem das Lötschichtsystem eine Zwischenschicht, bestehend aus Platin oder Eisen/Nickel oder Nickel oder Palladium, und eine Abschlussschicht, bestehend aus Gold enthält.

5. Verfahren nach einem der Ansprüche 1 bis 4, bei dem die rahmenförmigen Teilbereiche der optischen Beschichtung durch chemische Mittel entfernt werden.

6. Verfahren nach einem der Ansprüche 1 bis 4, bei dem die rahmenförmigen Teilbereiche der optischen Beschichtung mechanisch entfernt werden.

## Claims

1. A method for producing window elements (1) which can be soldered into a housing so as to be hermetically tight, wherein an optically transparent, flat substrate material (2), whose size is sufficient for a plurality of window elements (1), is provided on at least one of its surfaces with an optical coating (5, 6) from which frame-shaped portions are then removed on a coated surface (3), said portions enclosing optically active surfaces of the window elements (1), and after said removal a metal coating (8) is applied to the uncoated portions (9) formed by said removal in order to produce a soldered connection to the housing (7) and the window elements (1) are separated from the substrate material (2).

2. The method according to claim 1, wherein the metal coating is applied by first of all providing the remaining optical coating and the uncoated portions completely with an adherence layer system, wherein the adherence layer system can be etched selectively with respect to the optical coating; covering portions that have said optical coating with a lift-off mask before applying a soldering layer system to the entire surface; after which the lift-off method leaves the metal coating that is used to produce the solder connection with the housing, and wherein the metal coating serves as a mask for etching the adherence layer system.

3. The method according to claim 2, wherein the adherence layer system that can be etched selectively with respect to the optical coating has an interdiffusion layer comprising aluminum and a barrier layer comprising titanium or a titanium alloy.

4. The method according to claim 2 or 3, wherein the soldering layer system contains an intermediate layer comprising platinum, or iron/nickel, or nickel, or palladium, and a closure layer comprising gold.

5. The method according to any one of claims 1 to 4, wherein the frame-like portions of the optical coating are chemically removed.

6. The method according to any one of claims 1 to 4, wherein the frame-like portions of the optical coating are mechanically removed.

## Revendications

1. Procédé de production d'éléments en forme de fenêtres (1) qui peuvent être soudées dans un boîtier de manière hermétiquement étanche, dans lequel procédé on applique sur au moins une des surfaces d'un substrat (2) plat et optiquement transparent, dont les dimensions suffisent pour former une pluralité d'éléments en forme de fenêtres (1), un revêtement optique (5, 6) duquel on enlève ensuite des parties en forme de cadres d'une surface enduite (3), lesdites parties enfermant des surfaces optiquement actives desdits éléments en forme de fenêtres (1), et après ledit enlèvement, on applique un revêtement métallique (8) sur les parties non pas enduites (9), formées par ledit enlèvement, afin de produire une jonction par soudure avec le boîtier (7) et on sépare dudit substrat (2) les éléments en forme de fenêtres (1).

2. Procédé selon la revendication 1, comprenant les étapes d'application dudit revêtement métallique par tout d'abord couvrant complètement le revêtement optique résiduel et les parties non pas enduites par un système de couches adhésives, qui peut être soumis à une gravure sélective par rapport audit revêtement optique, et couvrant ensuite les parties présentant le revêtement optique avec un masque retirable avant d'appliquer un système de couches de soudage sur toute la surface, ce qui donne le revêtement métallique qui est utilisé pour produire la jonction par soudure avec le boîtier et qui sert de masque de gravure du système de couches adhésives.

3. Procédé selon la revendication 2, dans lequel le système de couches adhésives qui peut être soumis à une gravure sélective par rapport audit revêtement optique présente une couche d'interdiffusion en aluminium et une couche barrière en titane ou en un alliage de titane.

4. Procédé selon la revendication 2 ou 3, dans lequel le système de couches de soudage présente une couche intermédiaire en platine, ou en fer/nickel, ou en nickel, ou en palladium, et une couche finale en or.

5. Procédé selon l'une quelconque des revendications 1 à 4, dans lequel les parties en forme de cadre du revêtement optique sont chimiquement enlevées.

6. Procédé selon l'une quelconque des revendications 1 à 4, dans lequel les parties en forme de cadre du revêtement optique sont mécaniquement enlevées.
